# EUROPEAN PATENT SPECIFICATION

(11) **EP 1 464 048 B1**
(45) Date of publication and mention of the grant of the patent: **26.08.2009**
(21) Application number: 02795940.2
(22) Date of filing: 19.12.2002
(51) Int. Cl.: G10L 15/26, H04R 3/00

(54) **TRANSLATION DEVICE WITH PLANAR MICROPHONE ARRAY**
ÜBERSETZUNGSEINRICHTUNG MIT EINEM PLANAREN MIKROFONARRAY
DISPOSITIF DE TRADUCTION PRESENTANT UN RESEAU PLAN DE MICROPHONES

(30) Priority: 31.12.2001 US 346179 P; 30.08.2002 US 234085
(43) Date of publication of application: 06.10.2004
(73) Proprietor: Speechgear, Inc., Northfield, MN 55057 (US)
(72) Inventor: PALMQUIST, Robert, Faribault, MN 55021 (US)
(74) Representative: Hilleringmann, Jochen
(86) International application number: PCT/US2002/040640
(87) International publication number: WO 2003/058606

(56) References cited:
- WO-A-01/31972
- US-A- 5 522 089
- US-A- 5 991 726
- US-A- 6 154 757
- NISHIURA T ET AL: "Automatic steering of microphone array and video camera toward multi-lingual tele-conference through speech-to-speech translation" MULTIMEDIA AND EXPO, 2001. ICME 2001. IEEE INTERNATIONAL CONFERENCE ON 22-25 AUG. 2001, PISCATAWAY, NJ, USA,IEEE, 22 August 2001 (2001-08-22), pages 447-450, XP010661871 ISBN: 0-7695-1198-8
- COMERFORD L ET AL: "The IBM Personal Speech Assistant" 2001 IEEE INTERNATIONAL CONFERENCE ON ACOUSTICS, SPEECH, AND SIGNAL PROCESSING. PROCEEDINGS (CAT. NO.01CH37221) IEEE PISCATAWAY, NJ, USA, vol. 1, 7 May 2001 (2001-05-07), - 11 May 2001 (2001-05-11) pages 1-4 vol.1, XP002319291 ISBN: 0-7803-7041-4
- GILLOIRE A ET AL: "Innovative speech processing for mobile terminals: an annotated bibliography" SIGNAL PROCESSING, AMSTERDAM, NL, vol. 80, no. 7, July 2000 (2000-07), pages 1149-1166, XP004200934 ISSN: 0165-1684
- HOGAN C.; FREDERKING R.: 'WebDIPLOMAT: A Web-Based Interactive Machine Translation System' PROCEEDINGS OF THE 18TH CONFERENCE ON COMPUTATIONAL LINGUISTICS, SAARBRÜCKEN 2000, MORRISTOWN, NJ, USA, pages 1041 - 1045

## Description

### TECHNICAL FIELD

The invention relates to electronic detection of audible communication, and more particularly, to electronic sensing of the human voice.

### BACKGROUND

The need for real-time language translation has become increasingly important. It is becoming more common for a person to encounter an environment in which an unfamiliar foreign language is spoken or written. Trade with a foreign company, cooperation of forces in a multi-national military operation in a foreign land, emigration and tourism are just some examples of situations that bring people in contact with languages with which they may be unfamiliar.

In some circumstances, the language barrier presents a very difficult problem. A person may not know enough of the local language to be able to obtain assistance with a problem or ask for directions or order a meal. The person may wish to use any of a number of commercially available translation systems. Some such systems require the person to enter the word or phrase to be translated manually, which is time consuming and inconvenient. Other systems allow the person to enter the word or phrase to be translated audibly, but local noise may interfere with the translation.
NISHIURA T ET AL: "Automatic steering of microphone array and video camera toward multi-lingual tele-conference through speech-to-speech translation" MULTIMEDIA AND EXPO, 2001. ICME 2001. IEEE INTERNATIONAL CONFERENCE ON 22-25 AUG. 2001, PISCATAWAY, NJ, USA, IEEE, 22. August 2001 (2001-08-22), pages 447-450, XP01066187, ISBN: 0-7695-1198-8, discloses a microphone and video camera system for multi-lingual tele-conference with speech-to-speech translation. In this system a microphone array and a video camera are automatically steered towards the speaker among a group of persons which participate in a tele-conference with other persons located remotely. Steering of the microphone array and video camera is realized based on acoustically localizing the sound direction.

WO-A-01/31972 discloses a handheld digital assistant comprising a body for housing a processing means and a display and a microphone array integral to the body and including a number of microphone elements, wherein the processing means is operable to receive microphone signals generated by the microphone array and perform tasks based on the microphone signals.

Hogan C, Frederking R: "WebDIPLOMAT: A Web-Based Interactive Machine Translatoin System", Proceedings of the 18th Conference on Computational Linguistics, Saarbrücken, 2000, pages 1041-1045, Morristown, NJ, USA, discloses a translation system or conversations wherein the speech from a user is recognized and displayed on a screen. If the text is acceptable to the user, it is submitted for translation and transfer to another party of the conversation.

Finally, in the article of Comerford L et al: "THE IBM PERSONAL SPEECH ASSISTANT", IEEE, 2001, XP-002319291, there is described a handheld translation device using a single microphone which is modified and located to support voice operation at the distance and orientation typical of reading or writing on a Palm.

### SUMMARY

The present invention provides a handheld translation device as defined in claim 1. Individual embodiments of the invention are the subject matter of the dependent claims.

The details of one or more embodiments of the invention are set forth in the accompanying drawings and the description below. Other features, objects, and advantages of the invention will be apparent from the description and drawings, and from the claims.

### BRIEF DESCRIPTION OF DRAWINGS

FIG. 1 is a perspective drawing of an embodiment of the invention, with a user and a noise source.
FIG 2 is a perspective drawing of an embodiment of the invention in use.
FIG 3 is a block diagram illustrating an embodiment of the invention.
FIG. 4 is a flow diagram illustrating interaction between a user and a device embodying the invention.

### DETAILED DESCRIPTION

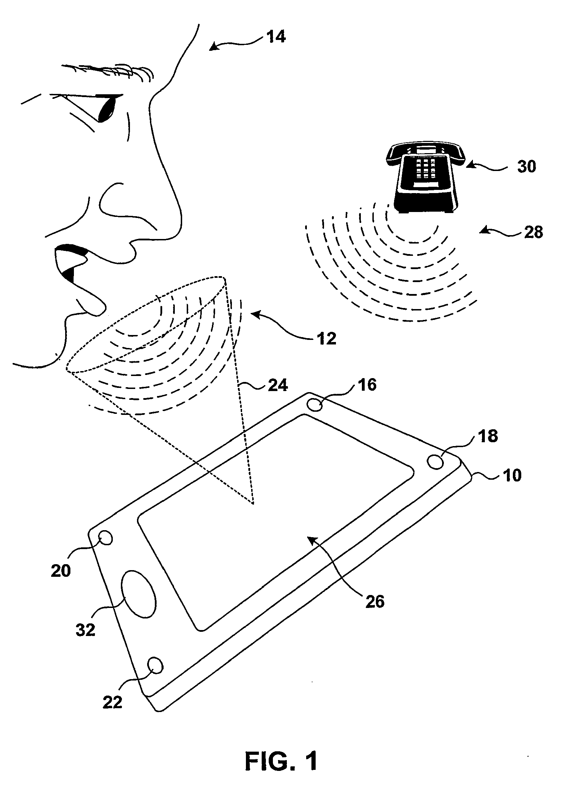

FIG. 1 is a perspective drawing of a translating device 10, which receives audio input 12 from a user 14. The audio input 12 includes words spoken in a "source language," which is usually a language with which user 14 is familiar. If the user is a native speaker of English, for example, the source language may be English. Translating device 10 receives audio input 12 via microphones 16, 18, 20 and 22. As will be described in more detail below, microphones 16,18,20 and 22 form an array that selects sounds originating from a direction of sensitivity, represented by cone-like volume 24, and reject sounds originating from directions outside direction of sensitivity 24.

Translating device 10 is a handheld device, such as a handheld computer or a personal digital assistant (PDA). In the embodiment depicted in FIG. 1, translating device 10 includes four microphones 16, 18, 20 and 22 arrayed in the corners of device 10 in a rectangular pattern, but this configuration is exemplary. Corner placement may be advantageous for a handheld device because user 14 may prefer to hold the device in the center along the outer edges of the device and thus be less likely to cover a microphone placed in a corner.

Translating device 10 includes at least three microphones, which define a plane. In alternate examples, translating device 10 may include any number of microphones in any pattern, but in general the microphones are planar and are spaced apart at known distances so that the array can select sounds originating from direction of sensitivity 24 and reject sounds originating from directions outside direction of sensitivity 24.

The translating device 10 includes a display screen 26. Display screen 26 is oriented within the same plane occupied by microphones 16, 18, 20 and 22. If display screen 26 and microphones 16, 18, 20, 22 are co-planar, user 14 may find it intuitive to "speak into the display," in effect, and thereby direct speech within direction of sensitivity 24.

Translating device 10 may include an audio output circuit that includes an audio output device such as speaker 32. Speaker 32 may be provided in addition to display screen 26. Speaker 32 may be oriented within the same plane occupied by microphones 16, 18, 20 and 22. Speaker 32 may also be positioned such that user 14 may find it intuitive to "talk to the speaker," thereby directing speech within direction of sensitivity 24.

Microphones 16, 18, 20 and 22 may be, for example, omnidirectional microphones. Direction of sensitivity 24 may be defined by a signal processing circuit (not shown in FIG. 1) that processes the signals from microphones 16, 18, 20 and 22 according to any of several techniques for spatial filtering. In one technique, for example, sound originating from direction of sensitivity 24, such as audio input 12, arrives at microphones 16, 18, 20 and 22 nearly simultaneously, and accordingly the signals generated by microphones 16, 18, 20 and 22 in response to such a sound are nearly in phase. Noise 28 from a noise source 30, by contrast, arrives at microphones 16, 18, 20 and 22 at different times, resulting in a phase shift. By comparing the phase differences between or among signals generated by different microphones, translating device 10 can select those sounds that originate from direction of sensitivity 24, and can reject those sounds that originate from outside direction of sensitivity 24.

Microphones 16, 18, 20 and 22 may also be directional microphones that are physically constructed to be more sensitive to sounds originating from direction of sensitivity 24. Direction of sensitivity 24 may therefore be a function of the physical characteristics of microphones 16, 18, 20 and 22. In addition, direction of sensitivity 24 may be a function of the spatial filtering functions of the signal processing circuit and the physical characteristics of the microphones.

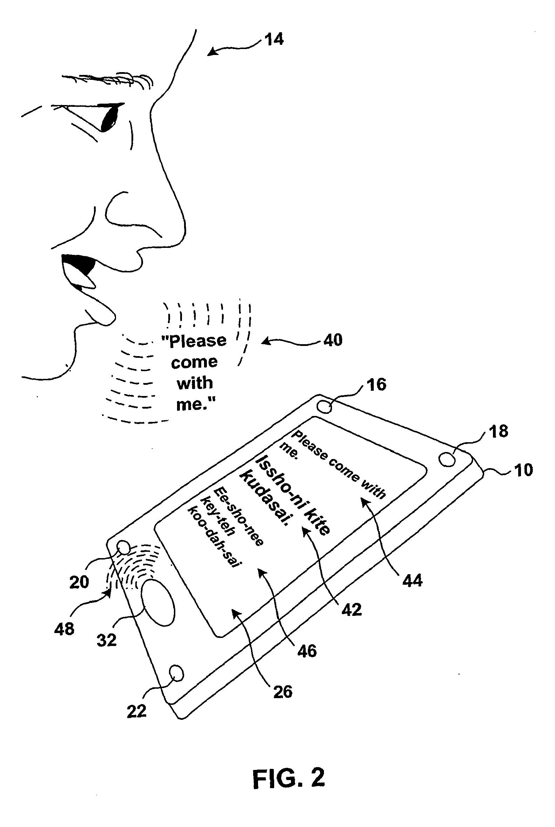

FIG. 2 is a perspective drawing of a translating device 10 in an ordinary application. User 14 utters a word, phrase or sentence 40 in the source language. Utterance 40 is within direction of sensitivity 24. Translating device 10 receives utterance 40 and produces a graphic translation 42 of utterance 40 on display screen 26. Graphic translation 42 is in a "target language," which is a language with which user 14 is usually unfamiliar. The translation is "graphic" in that the translation may be displayed in any visual form, using any appropriate alphabet, symbols or character sets, or any combination thereof.

In addition to graphic translation 42, translating device 10 displays other data on screen 26, such as a graphic version 44 of utterance 40. Graphic version 44 echoes spoken utterance 40, and user 14 may consult graphic version 44 to see whether translating device 10 has correctly understood utterance 40. Translating device 10 also supplies other information, such as a phonetic pronunciation 46 of graphic translation 42, optionally a representation of the translation in the character set of the target language.

In addition to graphic translation 42, translating device 10 may supply an audio version 48 of the translation of utterance 40. Translating device 10 may include speech synthesis capability, allowing the translation to be issued audibly via speaker 32. Furthermore, translating device 10 may repeat utterance 40 back to user 14 with synthesized speech via speaker 32, so that user 14 may determine whether translating device 10 has correctly understood utterance 40.

Translating device 10 may translate from a language with which user 14 is unfamiliar to a language with which user 14 is familiar. In one exemplary application, user 14 may be able to speak the source language but not comprehend it, such as when a word or phrase is written phonetically. Some languages, such as Spanish or Japanese kana, are written phonetically. Translating device 10 may receive the words spoken by user 14 in an unfamiliar language and display or audibly issue a translation in a more familiar language. In another exemplary application, user 14 may hold a conversation with a speaker of the language unfamiliar to user 14. The parties to the conversation may alternate speaking to translating device 10, which serves as an interpreter for both sides of the conversation.

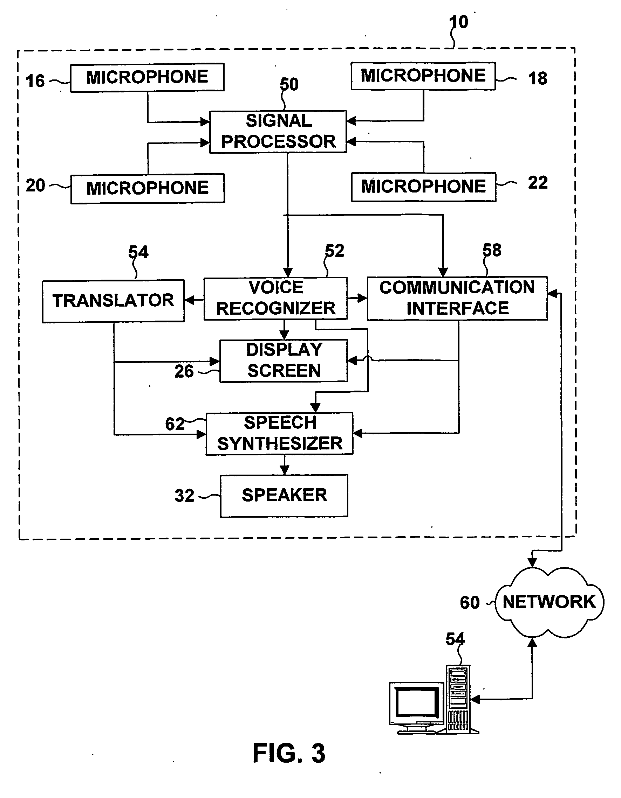

FIG. 3 is a block diagram illustrating an embodiment of the invention. Microphones 16, 18, 20 and 22 supply signals to signal processing circuit 50. Signal processing circuit 50 spatially filters the signals to select sounds from direction of sensitivity 24 and reject sounds from outside direction of sensitivity 24. Although microphones 16, 18, 20 and 22 may detect several distinct sounds, signal processing circuit 50 selects which sounds will be subjected to further processing.

In addition to selecting the sounds for further processing, signal processing circuit 50 may perform other functions, such as amplifying the signals of selected sounds and filtering undesirable frequency components. Signal processing circuit 50 may include circuitry that processes the signals with analog techniques, circuitry that processes the signals digitally, or circuitry that uses a combination of analog and digital techniques. Signal processing circuit 50 may further include an analog-to-digital converter that converts analog signals to digital signals for digital processing.

Selected sounds may be supplied to a voice recognizer 52 such as a voice recognition circuit. Voice recognizer 52 interprets the selected sounds and extracts spoken words in the source language from the sounds. The extracted words may be presented on display screen 26 to user 14, and user 14 may determine whether translating device 10 has correctly extracted the words spoken. The extracted words may also be supplied to a speech synthesizer 62, which repeats the words via speaker 32. Voice recognition and speech synthesis software and/or hardware for different source languages may be commercially available from several different companies.

The extracted words may be supplied to a translator 54, which translates the words spoken in the source language to the target language. Translator 54 may employ any of a variety of translation programs. Different companies may make commercially available translation programs for different target languages. The translation is presented on display screen 26 to user 14, optionally supplied to speech synthesizer 62 and audibly issued by speaker 32 as synthesized speech. Translator 54 also provides additional information, such as phonetic pronunciation 46, for presentation via display screen 26, optionally speaker 32.

As shown in FIG. 3, voice recognizer 52 and translator 54 are included in translating device 10. The invention also encompasses embodiments in which voice recognition is performed remotely. Instead of supplying selected sounds to an on-board voice recognizer 52, translating device 10 may supply information representative of the selected sounds to a server 56 via a communication interface 58 and a network 60. Server 56 may perform voice recognition and supply to translating device 10. Communication interface 58 may include, for example, a cellular telephone or an integrated wireless transceiver. Network 60 may include, for example, a wireless telecommunication network such as a network implementing Bluetooth, a cellular telephone network, the public switched telephone network, an integrated digital services network, satellite network or the Internet, or any combination thereof.

Voice recognition and translation, whether performed by translating device 10 or by server 56, need not be limited to a single source language and a single target language. Translating device 10 may be configured to receive multiple source languages and to translate to multiple target languages.

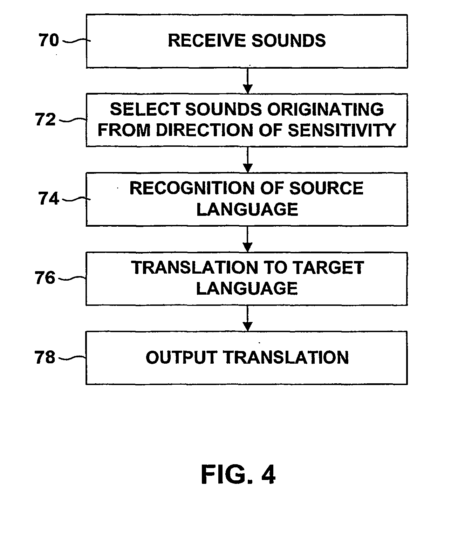

FIG 4 is a flow diagram illustrating an embodiment of the invention. Translating device 10 receives sounds (70) via microphones 16, 18, 20 and 22. Signal processing circuit 50 selects the sounds from direction of sensitivity 24 for further processing (72). A voice recognizer 52, such as voice recognition circuit, interprets the selected sounds and extracts spoken words in the source language from the sounds (74). A translator 54 translates the words in the source language to words in the target language (76). Display screen 26 displays the translation, optionally speaker 32 audibly issues the translation (78).

The invention can provide one or more advantages. Translating device 10 may be small, lightweight and portable. Portability allows travelers, such as tourists, to be more mobile, to see sights and to obtain translations as desired. In addition, the invention may have a multi-language capability, and need not be customized to any particular language. The user may also have the choice of using on-board voice recognition and translation capabilities, or using voice recognition capabilities of a remote or nearby server. In some circumstances, a server may provide more fully-featured voice recognition capability.

The invention may be used in a variety of noisy environments. The planar array of microphones and signal processing circuitry define a direction of sensitivity that selects sounds originating from the direction of sensitivity and rejects sounds originating from outside the direction of sensitivity. This spatial filtering improves voice recognition by removing interference caused by extraneous noise in the environment. The user need not wear a microphone in a headset or other cumbersome apparatus.

Several embodiments of the invention have been described. Various modifications may be made without departing from the scope of the invention. For example, translating device 10 may include other input/output devices, such as a keyboard, mouse, touch pad, stylus or push buttons. A user may employ any of these input/output devices for several purposes. For example, when translating device 10 displays a graphic version 44 of the words uttered by the user, the user may employ an input/output device to correct errors in graphic version 44. The user may also employ an input/output device to configure translation device 10, such as by selecting a source language or target language, or by programming signal processor 50 to establish the dimensions and orientation of direction of sensitivity cone 24. Translating device 10 may also include an audio output device in addition to or other than a speaker, such as a jack for an earphone.

## Claims

1. A handheld translating device (10) comprising:
- a planar array of microphones (16,18,20,22) including at least three microphones that define a plane, each of the microphones generating a signal in response to a sound;
- a signal processing circuit (50) that processes the signals to select the signals when the sound originates from a direction of sensitivity (24) defined by the plane of the microphones (16,18,20,22) in the planar array and to reject the signals when the sound originates from outside the direction of sensitivity (24),
- a display (26) that is substantially coplanar with the plane of the microphones (16,18,20,22) in the planar array such that when a user (14) is positioned to view the display (26), words uttered by the user (14) fall within the direction of sensitivity (24) and define the sound as originating from the direction of sensitivity (24), and
- a language translator (54) that translates the words from a first language to a second language, further wherein when the sound includes the words uttered by the user (14) in the first language from the direction of sensitivity (24), the display (26) displays the words in the first language (44), a translation of the words in the second language (42) and a phonetic pronunciation (46) of the translation.

2. The handheld translating device of claim 1, further comprising a voice recognizer (52) that extracts the words in the first language from the sound.

3. The handheld translating device of claim 1 or 2, wherein the planar array of microphones (16,18,20,22) consists for four microphones arranged in corners of the device to define a rectangle.

4. The handheld translating device of any one of claims 1 to 3, wherein the signal processing circuit (50) comprises a spatial filter.

5. The handheld translating device of any one of claims 1 to 4, wherein the microphones (16,18, 20,22) in the planar array of microphones comprise directional microphones.

6. The handheld translating device of any one of claims 1 to 5, wherein the direction of sensitivity (24) comprises a directional cone-like volume that emanates outward from a center of the display (26).

7. The handheld translating device of any one of claims 1 to 6, further comprising a communication interface (58) that transmits the sound in the first language to a server (56).

8. The handheld translating device of claim 1, further comprising an audio output device (32) that outputs:
- an audible version of the words in the first language, and
- an audible version of the translation.

## Patentansprüche

1. Hand-Übersetzungsgerät (10) mit:
- einer planaren Anordnung von Mikrophonen (16, 18, 20, 22), welche mindestens drei Mikrophone umfasst, welche eine Ebene bilden, wobei jedes der Mikrophone in Reaktion auf einen Schall ein Signal erzeugt;
- einer Signalverarbeitungsschaltung (50), welche die Signale verarbeitet, um die Signale zu selektieren, wenn der Schall aus einer Empfindlichkeitsrichtung (24) kommt, welche durch die Ebene der Mikrophone (16, 18, 20, 22) in der planaren Anordnung definiert ist, und um die Signale zurückzuweisen, wenn der Schall von außerhalb der Empfindlichkeitsrichtung (24) kommt,
- einer Anzeige (26), die im Wesentlichen komplanar mit der Ebene der Mikrophone (16, 18, 20, 22) in der planaren Anordnung ist, so dass, wenn ein Benutzer (14) zum Betrachten der Anzeige (26) positioniert ist, von dem Benutzer (14) geäußerte Wörter innerhalb der Empfindlichkeitsrichtung (24) liegen und den Schall als aus der Empfindlichkeitsrichtung (24) kommend definieren, und
- einen Sprachübersetzer (54), der die Wörter aus einer ersten Sprache in eine zweite Sprache übersetzt, wobei ferner, wenn der Schall die von dem Benutzer (14) aus der Empfindlichkeitsrichtung (24) in der ersten Sprache geäußerten Wörter enthält, die Anzeige (26) die Wörter in der ersten Sprache (44), eine Übersetzung der Wörter in der zweiten Sprache (42) und eine phonetische Aussprache (46) der Übersetzung anzeigt.

2. Hand-Übersetzungsgerät nach Anspruch 1, ferner mit einer Spracherkennungseinrichtung (52), welche die Wörter in der ersten Sprache aus dem Schall extrahiert.

3. Hand-Übersetzungsgerät nach Anspruch 1 oder 2, bei dem die planare Anordnung von Mikrophonen (16, 18, 20, 22) aus mindestens vier Mikrophonen besteht, welche in den Ecken der Vorrichtung zur Bildung eines Rechtecks angeordnet sind.

4. Hand-Übersetzungsgerät nach einem der Ansprüche 1 bis 3, bei dem die Signalverarbeitungsschaltung (50) einen Raumfilter umfasst.

5. Hand-Übersetzungsgerät nach einem der Ansprüche 1 bis 4, bei dem die Mikrophone (16, 18, 20, 22) in der planaren Anordnung von Mikrophonen Richtmikrophone aufweisen.

6. Hand-Übersetzungsgerät nach einem der Ansprüche 1 bis 5, bei dem die Empfindlichkeitsrichtung (24) ein konusartiges Richtvolumen aufweist, das sich von der Mitte der Anzeige (26) aus nach außen erstreckt.

7. Hand-Übersetzungsgerät nach einem der Ansprüche 1 bis 6, ferner mit einem Kommunikationsinterface (58), das den in der ersten Sprache gesprochenen Schall an einen Server (56) übermittelt.

8. Hand-Übersetzungsgerät nach Anspruch 1, ferner mit einer Audio-Ausgabevorrichtung (32), welche ausgibt:
- eine hörbare Version der Wörter in der ersten Sprache, und
- eine hörbare Version der Übersetzung.

## Revendications

1. Dispositif de traduction à main (10) comprenant:
- un arrangement planaire de microphones (16, 18, 20, 22) comprenant au moins trois microphones définissant un plan, chaque microphone générant un signal en réaction à un son;
- un circuit de traitement de signal (50) traitant les signaux pour sélectionner les signaux, si le son origine d'une direction de sensitivité (24) définie par le plan des microphones (16, 18, 20, 22) dans l'arrangement planaire, et pour refuser les signaux, si le son origine de hors de la direction de sensitivité (24),
- un display (26) sensiblement coplanaire avec le plan des microphones (16, 18, 20, 22) dans l'arrangement planaire de manière à ce que, si un utilisateur (14) est positionné pour voir le display (26), les mots parlés par l'utilisateur (14) soient dans la direction de sensitivité (24) et définissent le son comme originant de la direction de sensitivité (24), et
- un moyen de traduction de langue (54) traduisant les mots d'une lange première en une langue deuxième, le display (26), en outre, affichant, si le son comprend les mots énoncés dans la direction de sensitivité (24) par l'utilisateur (14) dans la langue première, les mots en la langue première (44), une traduction desdits mots en la langue deuxième (42) et une prononciation phonétique (46) de la traduction.

2. Dispositif de traduction à main selon la revendication 1, comprenant en outre un moyen de reconnaissance vocale (52) qui extrait dudit son les mots en la langue première.

3. Dispositif de traduction à main selon la revendication 1 ou 2, dans lequel l'arrangement planaire de microphones (16, 18, 20, 22) comprend quatre microphones disposés dans les coins du dispositif, de manière à définir un rectangle.

4. Dispositif de traduction à main selon l'une quelconque des revendications 1 à 3, dans lequel le circuit de traitement de signal (50) comprend un filtre spatial.

5. Dispositif de traduction à main selon l'une quelconque des revendications 1 à 4, dans lequel les microphones (16, 18, 20, 22) dans l'arrangement planaire de microphones comprennent des microphones directifs.

6. Dispositif de traduction à main selon l'une quelconque des revendications 1 à 5, dans lequel la direction de sensitivité (24) comprend un volume directif conique émanant du centre du display (26) vers l'extérieur.

7. Dispositif de traduction à main selon l'une quelconque des revendications 1 à 6, comprenant en outre une interface de communication (58) transmettant le son en la langue première à un serveur (56).

8. Dispositif de traduction à main selon la revendication 1, comprenant en outre un dispositif de sortie audio (32) qui fait sortir:
- une version audible des mots en la langue première, et
- une version audible de la traduction.
